# EUROPÄISCHE PATENTSCHRIFT

(11) **EP 0 764 069 B1**
(45) Veröffentlichungstag und Bekanntmachung des Hinweises auf die Patenterteilung: **10.11.1999**
(21) Anmeldenummer: 95940145.6
(22) Anmeldetag: 07.12.1995
(51) Int. Cl.: B23H 11/00

(54) **KONTAKTTEIL ZUR STROMÜBERTRAGUNG AUF EIN WERKSTÜCK BEI DER ELEKTROCHEMISCHEN MATERIALBEARBEITUNG**
CONTACT FOR FEEDING CURRENT TO A WORKPIECE IN ELECTROCHEMICAL-WORKING PROCESSES
PIECE DE CONTACT SERVANT A TRANSMETTRE LE COURANT A UNE PIECE LORS DE L'USINAGE ELECTROCHIMIQUE

(30) Priorität: 03.01.1995 DE 19500042
(43) Veröffentlichungstag der Anmeldung: 26.03.1997
(73) Patentinhaber: ROBERT BOSCH GMBH, 70442 Stuttgart (DE)
(72) Erfinder: MAUZ, Wolfgang, D-70771 Leinfelden-Echterdingen (DE)
(86) Internationale Anmeldenummer: DE9501744
(87) Internationale Veröffentlichungsnummer: WO9620804

(56) Entgegenhaltungen:
- DE-A- 2 246 774
- DE-U- 6 606 259
- DE-U- 7 508 024
- US-A- 3 869 373
- US-A- 4 941 953

## Beschreibung

### Stand der Technik

Die Erfindung geht aus von einem Kontaktteil zur Stromübertragung auf ein Werkstück bei der elektrochemischen Materialbearbeitung nach der Gattung des Hauptanspruchs.

Die Bearbeitung von Werkstücken erfolgt bei der elektrochemischen Materialbearbeitung bekanntlich dadurch, daß ein Strom hoher Dichte vom positiv gepolten Werkstück über einen sich im Arbeitsspalt befindenden Elektrolyten zur negativ gepolten Werkzeug-Elektrode fließt. Die Zufuhr des Stroms zum Werkstück erfolgt dabei über Kontaktteile, die während eines Bearbeitungszeitraumes mit dem Werkstück in Berührung stehen. Eine einwandfreie Kontaktierung ist dabei unerläßlich, da Arbeitsströme von einigen 100 Ampere von den Kontaktteilen auf das Werkstück übertragen werden müssen.

Im DE-GM 75 08 024 wird auf ein Kontaktteil zur Kontaktierung von Werkstücken hingewiesen, welches mit einem Kontaktträger aus Kupfer und einem Kontaktstück aus Platin ausgeführt ist, wobei das Kontaktstück ein fließgepreßtes Formteil ist, welches durch Hartlöten am Kontaktträger angebracht wird. Nach dem Hartlöten wird der Kontaktträger zum Schutz gegen anodisches Abtragen mit einem thermoplastischen Kunststoff umspritzt. Dieser ist deshalb notwendig, weil der Kontaktträger ebenfalls mit dem Elektrolyt in Berührung kommt und sich dadurch anodisch zersetzen würde. Aus dem DE-GM 75 08 084 ist bereits bekannt, den Kontaktträger aus einem refraktären Metall herzustellen, welches unter bestimmten elektrochemischen Bedingungen eine anodische Schutzschicht bildet. Dadurch erübrigt sich die sonst notwendige Beschichtung des Kontaktträgers mit einem thermoplastischen Kunststoff. Als geeignete Metalle werden dabei Titan, Niob und Tantal genannt. Die von Titan gebildeten anodische Schutzschicht ist nicht stark genug, um einen langzeitstabilen Überzug zu bilden. Die Metalle Niob und Tantal sind teure und schlecht verfügbare Materialien.

Die im Stand der Technik bekannte Verwendung eines fließgepreßten Näpfchens als Kontaktstück bei dem mit thermoplastischem Kunststoff ummantelten Kontaktträgern ist notwendig, weil diese Form eine große Überdeckung des Näpfchens mit dem thermoplastischen Kunststoff garantiert, die wiederum erforderlich ist, um eine sichere Abdichtung des Kontaktträgers gegen die Elektrolytlösung zu bieten.

Ein weiteren gattungsgemäßes Kontaktteil ist aus der US-A-3869 373 bekannt; bei diesem besteht der Kontaktträger aus einer Kupfer-Chromlegierung mit einem tirkoniumanteil von ca 0.05%.

### Vorteile der Erfindung

Die erfindungsgemäße Vorrichtung mit den kennzeichnenden Merkmalen des Hauptanspruchs hat den Vorteil, daß das Zirkonium geeignet ist, mit Natriumnitrat eine stabile anodische Schutzschicht auszubilden.

Der Verzicht auf die Ummantelung mit thermoplastischem Kunststoff ist vorteilhaft da ein massives Kontaktstück in Form eines einfachen Plättchens an den Kontaktträger anschweißbar ist. Dadurch ist es z.B. auch möglich, daß für die Kontaktstücke härtere Legierungen eingesetzt werden können.

### Zeichnung

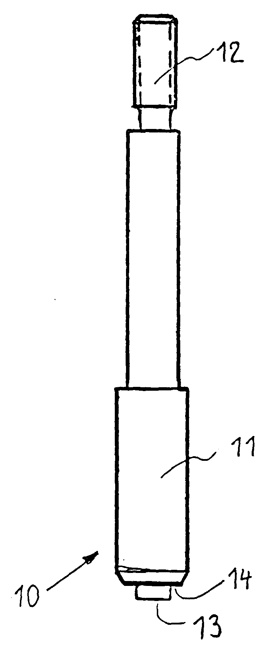

Ein Ausführungsbeispiel der Erfindung ist in der Zeichnung dargestellt und in der nachfolgenden Beschreibung näher erläutert. Die einzige Figur zeigt eine schematische Ansicht eines Kontaktteils.

### Ausführungsbeispiel

Ein Kontaktteil 10 besteht aus einem rotationssymmetrischen Kontaktträger 11, der an einem Ende mit einem Gewindeanschlußbolzen 12 zum Anschluß eines nicht dargestellten Stromkabels und am gegenüberliegenden Ende eine Stirnfläche 14 aufweist, an der ein Kontaktstück 13 aus Edelmetall befestigt ist. Es ist aber auch denkbar, den Kontaktträger derart auszubilden, daß er in eine Aufnahme steckbar ist.

Der Kontaktträger 11 besteht aus Zirkonium oder einer entsprechenden Zirkoniumlegierung. Zirkonium bildet unter elektrochemischen Bedingungen bei Verwendung eines Natriumnitrat-Elektrolyten eine anodische Schutzschicht an der Oberfläche des Kontaktträgers 11 aus. Zur Herstellung des Kontaktteils 10 wird beispielsweise ein gezogener Zirkonium-Stift verwendet, der als Drehteil zur Form des Kontaktträgers 11 weiterbearbeitet wird.

Als Kontaktstück 13 wird eine massive Scheibe, beispielsweise aus Platin oder einer Platinlegierung verwendet, die in ihrem Durchmesser beispielsweise geringer gehalten ist als der Durchmesser der Stirnfläche 14 des Kontaktträgers 11. Das Kontaktstück 13 wird an der Stirnfläche 14 des Kontaktträgers 11 mit einem geeigneten Schweißverfahren befestigt.

## Patentansprüche

1. Kontaktteil zur Stromübertragung auf ein Werkstück bei der elektrochemischen Materialbearbeitung, mit einem Kontaktträger (11) und einem am Kontaktträger befestigten Kontaktstück (13), welches im Betrieb mit dem Werkstück in Berührung kommt, dadurch gekennzeichnet, daß der Kontaktträger (11) aus Zirkonium oder einer Zirkoniumlegierung besteht und daß das Kontaktstück (13) vorzugsweise an eine Stirnfläche (14) des Kontaktträgers (11) angeschweißt ist.

2. Kontaktteil nach Anspruch 1, dadurch gekennzeichnet, daß das Kontaktstück (13) eine massives Plättchen ist.

3. Kontaktteil nach Anspruch 2, dadurch gekennzeichnet, daß das Kontaktstück (13) eine Scheibe ist, deren Durchmesser kleiner ist als der Durchmesser der Stirnfläche (14) des Kontaktträger(11).

4. Kontaktteil nach Anspruch 1, 2 oder 3, dadurch gekennzeichnet, daß das Kontaktstück (13) aus Platin oder einer Platinlegierung besteht.

5. Kontaktteil nach Anspruch 1, dadurch gekennzeichnet, daß der Kontaktträger (11) aus einem gezogenen Rohling herstellbar ist.

## Claims

1. Contact element for transmitting current to a workpiece during electrochemical material processing, having a contact support (11) and having a contact piece (13) which is attached to the contact support and comes into contact with the workpiece during operation, characterized in that the contact support (11) is composed of zirconium or a zirconium alloy, and in that the contact piece (13) is preferably welded to the end surface (14) of the contact support (11).

2. Contact element according to Claim 1, characterized in that the contact piece (13) is a solid small plate.

3. Contact element according to Claim 2, characterized in that the contact piece (13) is a disc whose diameter is less than the diameter of the end surface (14) of the contact support (11).

4. Contact element according to Claim 1, 2 or 3, characterized in that the contact piece (13) is composed of platinum or a platinum alloy.

5. Contact element according to Claim 1, characterized in that the contact support (11) can be produced from a drawn blank.

## Revendications

1. Pièce de contact servant à transmettre le courant à une pièce d'oeuvre dans le cas d'un traitement électrochimique de sa matière, comprenant un porte-contact (11) et une pièce de contact (13) qui est fixée sur le porte-contact, et qui vient en contact de fonctionnement avec la pièce d'oeuvre,
caractérisée en ce que
• le porte-contact (11) est réalisé en zirconium ou en alliage à base de zirconium, et
• la pièce de contact (13) est de préférence soudée sur une face frontale (14) du porte-contact (11).

2. Pièce de contact selon la revendication 1,
caractérisée en ce que
la pièce de contact (13) est une plaquette massive.

3. Pièce de contact selon la revendication 2,
caractérisée en ce que
la pièce de contact (13) est un disque dont le diamètre est plus petit que le diamètre de la face frontale (14) du porte-contact (11).

4. Pièce de contact selon les revendications 1, 2 ou 3,
caractérisée en ce que
la pièce de contact (13) est réalisée en platine ou en alliage à base de platine.

5. Pièce de contact selon la revendication 1,
caractérisée en ce que
le porte-contact (11) peut être fabriqué à partir d'une ébauche étirée.
